# EUROPÄISCHE PATENTSCHRIFT

(11) **EP 1 148 326 B1**
(45) Veröffentlichungstag und Bekanntmachung des Hinweises auf die Patenterteilung: **20.07.2011**
(21) Anmeldenummer: 01109144.4
(22) Anmeldetag: 12.04.2001
(51) Int. Cl.: G01L 9/14

(54) **Hall-Sensor-Druckmessgerät**
Hall sensor pressure measuring device
Dispositif de mesure de pression avec capteur à effet Hall

(30) Priorität: 17.04.2000 DE 20007053 U
(43) Veröffentlichungstag der Anmeldung: 24.10.2001
(73) Patentinhaber: WIKA ALEXANDER WIEGAND GmbH & CO., D-63911 Klingenberg (DE)
(72) Erfinder: Krumpolz, Josef, 61184 Klingenberg (DE); Friebe, Bernhard, 61267 Neu-Anspach (DE)
(74) Vertreter: TBK

(56) Entgegenhaltungen:
- EP-A- 0 650 041
- DE-A- 3 104 379
- DE-A- 3 615 193
- US-A- 4 738 141

## Beschreibung

Die Erfindung bezieht sich auf ein Druckmessgerät mit den Merkmalen des Oberbegriffs von Patentanspruch 1.

Ein solches Druckmessgerät ist aus der Druckschrift DE 3104379 A bekannt. Bei dem bekannten Druckmessgerät legt der Magnet, der als Permanentmagnet ausgebildet ist, einen dem auf das federelastische Messglied wirkenden Druck entsprechenden Weg zurück. Dem Magnetfeld des Magneten sind der erste Hall-Sensor und der zweite Hall-Sensor ausgesetzt, die zusammen mit zwei weiteren Hall-Sensoren zu einer integrierten Hall-Sensor-Brückenschaltung zusammengefasst sind. Dieses bekannte Druckmessgerät liefert ein zum gemessenen Druck proportionales, einziges Geräte-Ausgangssignal, und als Sensorhalteeinrichtung, an der die Hall-Sensoren befestigt sind, dient eine Schaltungsplatte, die in Eingriff mit den am Sensorträger ausgebildeten Führungsschienen steht.

Es sind im Wesentlichen zwei Bauarten von Hall-Sensoren bekannt. Ein als sogenannter Linearsensor ausgebildeter Hall-Sensor erzeugt eine analoge Sensorausgangsspannung, die proportional zum magnetischen Fluss senkrecht durch die Hall-Platte des Hall-Sensors ist. Ein als sogenannter Schaltsensor ausgebildeter Hall-Sensor ist mit einem integrierten Komparator mit vorgegebenen Schaltpunkten versehen und liefert eine digitale Sensorausgangsspannung. In einem Druckmessgerät, das mit einem Hall-Sensor versehen ist, wird die Sensorausgangsspannung von der elektronischen Schaltung des Druckmessgeräts weiterverarbeitet. Im Falle eines Linearsensors liefert die elektronische Schaltung als Ausgangssignal ein Spannungssignal, das zum gemessenen Druck proportional ist. In diesem Fall arbeitet das Druckmessgerät als Druckmessumformer bzw. Druckferngeber. Im Falle eines Schaltsensors kann die digitale Sensorausgangsspannung als Steuersignal auf einen Halbleiterschalter der elektronischen Schaltung gegeben werden, der dann als Ausgangssignal des Druckmessgeräts ein Schaltsignal liefert. In diesem Falle handelt es sich bei dem Druckmessgerät um einen Druckschalter. Die Erfindung bezieht sich sowohl auf ein Druckmessgerät, das als Druckmessumformer bzw. Druckferngeber arbeitet, als auch auf ein Druckmessgerät, das als Druckschalter arbeitet.

Das aus der Druckschrift DE 3104379 A bekannte Druckmessgerät ist ein Druckmessumformer und liefert ein zum gemessenen Druck proportionales Geräte-Ausgangssignal. Wenn sowohl ein druckproportionales Ausgangssignal als auch ein Schaltsignal benötigt werden, muss zur Erzeugung des Schaltsignals ein zweites Druckmessgerät vorgesehen werden. Auch dann, wenn zwei Schaltsignale benötigt werden, erfordert dies nach dem Stand der Technik zwei separate Druckmessgeräte.

Ein als Druckschalter arbeitendes Druckmessgerät mit einem Hall-Sensor ist durch die Druckschrift DE 19917100 A bekannt. Bei diesem bekannten Druckmessgerät kann die Vorspannkraft einer Feder, die einen Magneten in Anlage an einer als Messglied dienenden Plattenfeder hält, mittels einer Stellschraube von außen eingestellt werden. Ferner kann bei diesem bekannten Druckmessgerät der Abstand des Hall-Sensors vom Magneten mittels einer Stellschraube eingestellt werden, die insgesamt innerhalb des Druckmessgeräts angeordnet ist.

Die Druckschrift DE 3615193 A offenbart ein Druckmessgerät mit einem ersten Hall-Sensor und einem zweiten Hall-Sensor, die elektrisch in Reihe miteinander geschaltet sind und deren Sensorausgangsspannungen von einer elektronischen Schaltung zu einem einzigen Ausgangssignal des Druckmessgerätes weiterverarbeitet werden. Die beiden Hall-Sensoren sind an einer gemeinsamen, als Sensorhalteeinrichtung dienenden Trägerplatte befestigt, die in ein Messgliedgehäuse geschraubt ist und es ermöglicht, die Stellung der zwei Hall-Sensoren zu justieren.

Der Erfindung liegt die Aufgabe zugrunde, das gattungsgemäße Druckmessgerät dahingehend weiterzubilden, dass es mehr als ein Ausgangssignal liefern kann und dass es auf einfache Weise einstellbar bzw. justierbar ist, und zwar vorzugsweise "vor Ort", das heißt am Einsatz- und Einbauort des Druckmessgerätes.

Diese Aufgabe wird erfindungsgemäß durch das Druckmessgerät gemäß Patentanspruch 1 gelöst, das sich dadurch auszeichnet, dass die elektronische Schaltung die Sensorausgangsspannung des ersten Hall-Sensors zu einem ersten Ausgangssignal des Druckmessgerätes weiterverarbeitet und die Sensorausgangsspannung des zweiten Hall-Sensors unabhängig von der Verarbeitung der Sensorausgangsspannung des ersten Hall-Sensors zu einem zweiten Ausgangssignal des Druckmessgerätes weiterverarbeitet, dass die Sensorhalteeinrichtung aus zwei Sensorhaltern besteht, an denen jeweils einer der zwei Hall-Sensoren befestigt ist und die jeweils mit einer der zwei Führungsschienen derart in Eingriff stehen, dass der Sensorhalter an der Führungsschiene entlang einer Bewegungsbahn verschiebbar ist, die parallel zur Bewegungsbahn des Magneten verläuft, und dass für jeden der zwei Sensorhalter eine Stellschraube vorgesehen ist, die mit dem zugeordneten Sensorhalter und dem Sensorträger derart in Eingriff steht, dass durch Drehen der Stellschraube der Sensorhalter entlang seiner Bewegungsbahn unabhängig von dem jeweils anderen Sensorhalter verschoben wird.

Bie dem erfindungsgemäßen Druckmessgerät ist der zweite Hall-Sensor mechanisch und elektrisch unabhängig vom ersten Hall-Sensor. Unabhängig von der Verarbeitung der Sensorausgangsspannung des ersten Hall-sensors wird die Sensorausgangsspannung des zweiten Hall-Sensors von der elektronischen Schaltung zu einem zweiten Ausgangssignal des Druckmessgerätes weiterverarbeitet. Jeder der beiden Hall-Sensoren kann entweder als Linearsensor oder als Schaltsensor ausgebildet sein, so dass das Druckmessgerät als Ausgangssignale beispielsweise sowohl ein druckproportionales Ausgangssignal als auch ein Schaltsignal oder zwei voneinander unabhängige Schaltsignale liefern kann. Aufgrund der erfindungsgemäßen Ausbildung wird diese Mehrfachfunktion mit nur einem federelastischen Messglied und nur einem Magneten erreicht.

Fesner ist jeder Hall-Sensor an einem ihm zugeordneten Sensorhalter befestigt, der an einer der Führungsschienen entlang einer Bewegungsbahn verschiebbar ist, die parallel zur Bewegungsbahn des Magneten verläuft. Jedem Hall-Sensor ist eine Stellschraube zugeordnet, mit deren Hilfe des Sensorhalter entlang seiner Führungsschiene verschoben werden kann und dann in der eingestellten Stellung gehalten wird. Die jeweilige Stellschraube weist vorzugsweise einen Gewindeabschnitt und einen zylindrischen Kopfabschnitt auf. Der Gewindeabschnitt steht in Gewindeeingriff mit dem Sensorhalter, und der Kopfabschnitt ist drehbar und in Axialrichtung der Stellschraube unverschiebbar in der Grundplatte gelagert, wobei die Stirnfläche des Kopfabschnitts auf der Außenseite der Grundplatte freiliegt. Auf diese Weise ist es möglich, von außen, d.h. ohne das Druckmessgerät zu öffnen, die Stellung jedes der zwei Hall-Sensoren einzustellen und dadurch den Hall-Sensor "vor Ort" zu justieren.

In vorteilhafter Ausbildung der Erfindung kann ebenfalls vorgesehen sein, dass der Sensorträger eine Grundplatte aus einem lichtdurchlässigen Material aufweist und dass jedem der Hall-Sensoren eine Leuchtdiode zugeordnet ist, die auf der Innenseite der Grundplatte angeordnet ist. Die jeweilige Leuchtdiode dient dazu, beispielsweise den Schaltzustand des zugeordneten Hall-Sensors anzuzeigen, und ermöglicht dadurch eine optische Zustandsüberwachung "vor Ort". Da die Grundplatte aus einem lichtdurchlässigen Material besteht, kann das Licht der Leuchtdiode durch die Grundplatte nach außen dringen, ohne dass hierzu eine Öffnung oder dergleichen notwendig ist, die die Abdichtung des Inneren des Druckmessgerätes erschweren würde.

Weitere vorteilhafte Ausgestaltungen der Erfindung sind in den Unteransprüchen definiert.

Ausführungsbeispiele der Erfindung sind in den Zeichnungen dargestellt und werden im folgenden näher erläutert. Es zeigen:
- Figur 1: eine Seitenansicht eines Druckmessgeräts gemäß einer ersten Ausführungsform;
- Figur 2: eine Draufsicht auf das Druckmessgerät gemäß Figur 1;
- Figur 3: eine Schnittdarstellung gemäß A-B in Figur 1;
- Figur 4: eine Schnittdarstellung gemäß C-D in Figur 3;
- Figur 5: eine ausschnittsweise Schnittdarstellung gemäß E-F in Figur 2;
- Figur 6: eine Schnittdarstellung gemäß G-H in Figur 7 durch ein Druckmessgerät gemäß einer zweiten Ausführungsform;
- Figur 7: eine Schnittdarstellung gemäß J-K in Figur 6;
- Figur 8: eine Seitenansicht einer Baugruppe, die sowohl bei der ersten Ausführungsform als auch bei der zweiten Ausführungsform vorhanden ist;
- Figur 9: eine perspektivische Explosionsdarstellung der ersten Ausführungsform; und
- Figur 10: eine perspektivische Explosionsdarstellung der zweiten Ausführungsform.

In der folgenden Erläuterung werden für gleiche bzw. entsprechende Elemente der Ausführungsformen die gleichen Bezugszeichen verwendet.

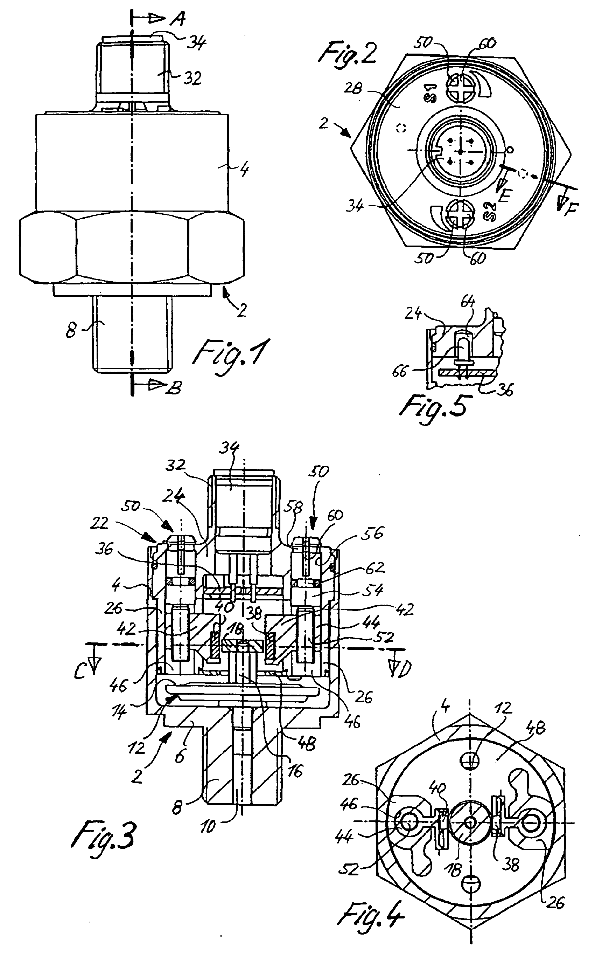

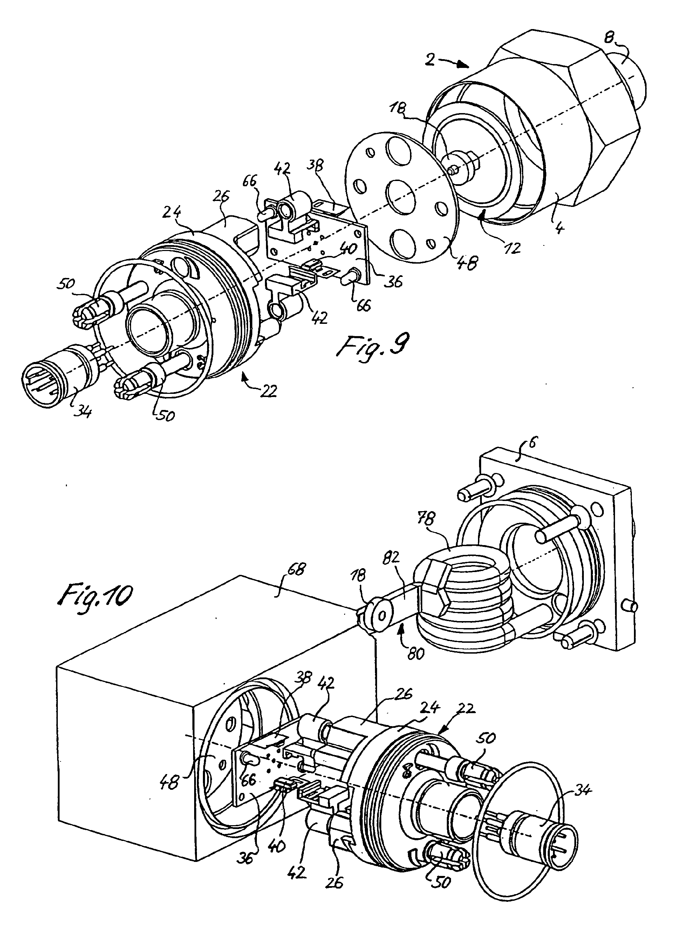

Zunächst wird unter Bezugnahme auf die Figuren 1 bis 5, 8 und 9, die erste Ausführungsform des Druckmessgerätes erläutert.

Die dargestellte erste Ausführungsform umfasst ein Messgliedgehäuse 2, das aus einer zylindrischen Wand 4 und einem Boden 6 besteht, die einstückig miteinander beispielsweise aus Metall ausgebildet sind. Am Boden 6 ist ein Geräteanschluss 8 angeformt, mittels dessen das Druckmessgerät an das System anschließbar ist, das den Messstoff führt, dessen Druck mittels des Druckmessgerätes gemessen werden soll. Axial durch den Geräteanschluss 8 verläuft eine Bohrung 10.

Innerhalb des Messgliedgehäuses 2 ist ein federelastisches Messglied angeordnet, dass beim dargestellten Ausführungsbeispiel als Kapselfeder 12 ausgebildet ist. Die Kapselfeder 12 weist einen Zapfen auf, der in die Bohrung 10 eingepasst ist, so dass der Messstoff durch die Bohrung 10 und den Zapfen in das Innere der Kapselfeder 12 gelangen kann. Die in Figur 3 obere Kapselfederhälfte 14 der Kapselfeder 12 wird je nach der Höhe des in der Kapselfeder 12 herrschenden Drucks mehr oder weniger ausgelenkt. An der oberen Kapselfederhälfte 14 ist ein Bolzen 16 befestigt, an dem wiederum ein Magnet 18 befestigt ist. Der Magnet 18 ist ein ringförmiger Permanentmagnet. Aufgrund seiner Verbindung mit der oberen Kapselfederhälfte 14 wird der Magnet 18 entsprechend der druckabhängigen Auslenkung der oberen Kapselfederhälfte 14 entlang einer geradlinigen Bewegungsbahn bewegt, die beim dargestellten Ausführungsbeispiel mit der Achse des Bolzens 16 zusammenfällt. Die Ebene des ringförmigen Magneten 18 verläuft senkrecht zu seiner Bewegungsbahn. Der Nordpol und der Südpol des Magneten 18 liegen auf einer in Richtung der Bewegungsbahn des Magneten 18 verlaufenden Achse, d.h. auf der in Figur 3 oberen bzw. unteren Stirnseite des Magneten 18.

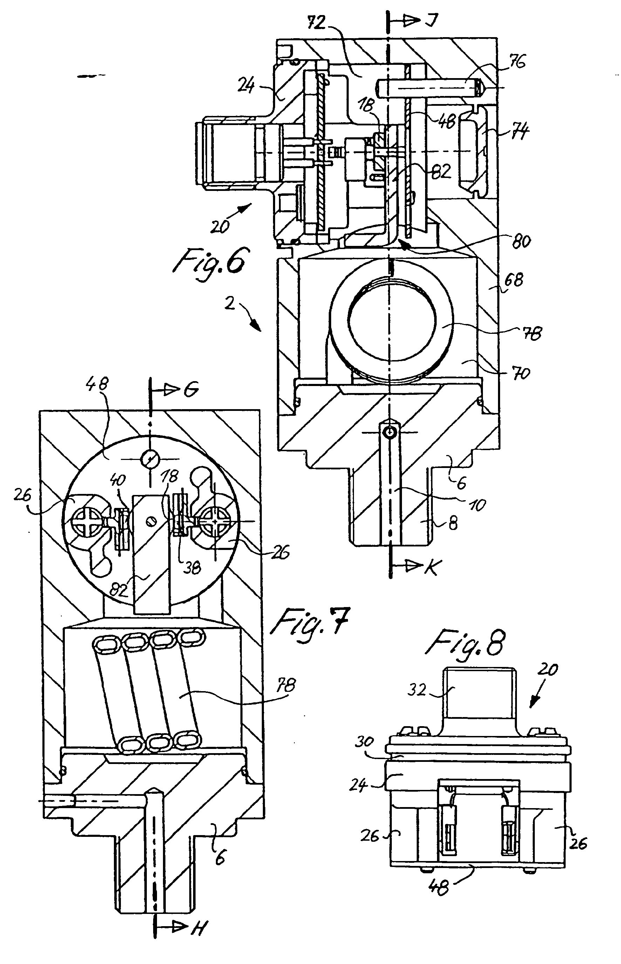

In das Messgliedgehäuse 12 ist eine Baugruppe 20 eingesetzt, die in Ansicht in Figur 8 dargestellt ist und im folgenden näher erläutert wird. In der Baugruppe 20 sind sämtliche Funktionselemente des Druckmessgerätes mit Ausnahme des federelastischen Messgliedes und des Magneten 18 zusammengefasst.

Die Baugruppe 20 umfasst einen Sensorträger 22, der eine Grundplatte 24 und zwei Führungsschienen 26 aufweist. Der Sensorträger 22 ist derart in das Messgliedgehäuse 2 eingesetzt, dass die Außenseite 28 der Grundplatte 24 am Druckmessgerät nach außen freiliegt und dass die Innenseite der Grundplatte 24 dem Inneren des Messgliedgehäuses 2 zugewandt ist. Die Grundplatte 24 sitzt auf einer Innenschulter der Wand 4 des Messgliedgehäuses (siehe Figur 3) und weist an ihrer Umfangswand eine umlaufende Nut 30 auf, in die ein O-Dichtring eingelegt ist, der an der Innenseite der Wand 4 dichtend anliegt.

Auf der Außenseite der Grundplatte 4 ist mittig ein Zapfen 32 angeformt, in den ein elektrischer Anschlussstecker 34 dicht eingepasst ist. Eine gedruckte Leiterplatte 36 ist neben der Innenseite der Grundplatte 24 angeordnet und an der Grundplatte 24 befestigt. Die Leiterplatte 26 trägt eine elektronische Schaltung und ist elektrisch mit dem Anschlussstecker 34 verbunden.

Die beiden Führungsschienen 26 sind an der Grundplatte 24 befestigt und erstrecken sich von deren Innenseite aus nach unten (in Figur 3). Die beiden Führungsschienen 26 sind auf diametral gegenüberliegenden Seiten bezüglich des Magneten 18 bzw. bezüglich seiner Bewegungsbahn angeordnet, wie insbesondere Figur 4 erkennen lässt. Bei dem dargestellten Ausführungsbeispiel sind die Grundplatte 24 und die zwei Führungsschienen 26, die gemeinsam den Sensorträger 22 bilden, sowie der Zapfen 32 einstückig miteinander als Kunststoff-Spritzgussteil ausgebildet. Aus später noch erläuterten Gründen bestehen die Grundplatte 24 und somit beim dargestellten Ausführungsbeispiel der gesamte Sensorträger 22 vorzugsweise aus einem lichtdurchlässigen Material.

Die Baugruppe 20 weist ferner einen ersten Hall-Sensor 38 und einen zweiten Hall-Sensor 40 auf. Jeder der beiden Hall-Sensoren 38 und 40 ist an einem ihm zugeordneten Sensorhalter 42 befestigt, der einen zylindrischen Abschnitt 44 aufweist. In jeder der beiden Führungsschienen 26 ist eine seitlich geschlitzte Nut 46 mit einem Profil ausgebildet, das zum Profil des zylindrischen Abschnitts 44 der Sensorhalter 42 komplementär ist. Der zylindrische Abschnitt 44 jedes der beiden Sensorhalter 42 ist in die Nut 46 der zugeordneten Führungsschiene 26 derart eingesetzt, dass die Sensorhalter 42 an den Führungsschienen 26 verschiebbar sind. Dabei verlaufen die beiden Führungsschienen 26 und die in ihnen ausgebildeten Nuten 46 in einer solchen Richtung, dass die Bewegungsbahnen, entlang denen der jeweilige Sensorhalter 42 verschiebbar ist, parallel zur Bewegungsbahn des Magneten 18 verlaufen.

Die beiden Sensorhalter 42 bilden eine Sensorhalteeinrichtung und halten den ersten Hall-Sensor 38 und den zweiten Hall-Sensor 40 in Figur 3 dargestellter Weise derart, dass die beiden Hall-Sensoren 38 und 40 mit geringem Abstand zum Magneten 18 seitlich neben diesem und außerhalb der Bewegungsbahn des Magneten 18 angeordnet sind. Beim dargestellten Ausführungsbeispiel sind die beiden Hall-Sensoren 38 und 40 auf diametral gegenüberliegenden Seiten bezüglich des Magneten 18 angeordnet. Der Magnet 18 kann sich somit ungehindert entlang seiner Bewegungsbahn zwischen den beiden Hall-Sensoren 38 und 40 bewegen. Bei dieser Bewegung wandert das die beiden Hall-Sensoren 38 und 40 durchsetzende Magnetfeld des Magneten 18 entlang den beiden Hall-Sensoren 38 und 40.

Wie sich aus der vorstehenden Beschreibung ergibt, sind die beiden Hall-Sensoren 38 und 40 mechanisch unabhängig voneinander angeordnet. Dies heißt, dass die Position des einen der beiden Hall-Sensoren relativ zum Magneten 18 nicht zugleich die Position des anderen der beiden Hall-Sensoren relativ zum Magneten 18 bestimmt. Der Sensorträger 22 und die beiden Sensorhalter 42 halten die beiden Hall-Sensoren 38 und 40 zwar in einer vorgegebenen oder eingestellten Position relativ zum Magneten 18. Diese Position kann aber für jeden der beiden Hall-Sensoren 38 und 40 unabhängig von der Position des anderen der beiden Hall-Sensoren vorgegeben oder verändert werden.

An den von der Grundplatte 24 abgewandten Enden der Führungsschienen 26 ist eine metallische Scheibe 48 befestigt. Diese Scheibe dient einerseits als Überlastsicherung für die Kapselfeder 14. Im Falle einer Überlast kommt die obere Kapselfederhälfte 14 in Anlage an der Scheibe 48, bevor die Überlast die Kapselfeder 12 beschädigen oder zerstören kann. Ferner dient die Scheibe 48, die im wesentlichen parallel zur Grundplatte 24 verläuft, zur mechanischen Stabilisierung der gesamten Baugruppe 20. Die Scheibe 48 hält die von der Grundplatte 24 abgewandten Enden der beiden Führungsschienen 26 im Sollabstand voneinander und verhindert dadurch beispielsweise temperaturbedingte Deformationen der beiden Führungsschienen 26. Dadurch wiederum ist gewährleistet, dass die beiden Führungsschienen 26 die Sensorhalter 42 und somit die Hall-Sensoren genau führen und halten.

Die Baugruppe 20 umfasst ferner für jeden der beiden Sensorhalter 42 eine Stellschraube 50, mit deren Hilfe der zugeordnete Sensorhalter 42 entlang seiner Führungsschiene 26 verschoben werden kann und dann in der eingestellten Stellung gehalten wird.

Die Stellschraube 50 weist einen Gewindeabschnitt 52 auf, der in Gewindeeingriff mit dem zugeordneten Sensorhalter 42 steht. Zu diesem Zweck ist der zylindrische Abschnitt 44 des Sensorhalters 42 mit einem Innengewinde versehen, in das der Gewindeabschnitt 52 geschraubt ist. Ferner weist die Stellschraube 50 einen kreiszylindrischen Kopfabschnitt 54 auf, der in einem in der Grundplatte 24 aufgebildeten Durchgangsloch 56 drehbar gelagert ist. Dabei ist die Anordnung derart getroffen, dass die Stirnfläche des Kopfabschnitts 54 auf der Außenseite 28 der Grundplatte 24 freiliegt, so dass dort ein Werkzeug an den Kopfabschnitt 54 angesetzt werden kann, um die Stellschraube 50 von außen, d.h. von außerhalb des gesamten Druckmessgerätes, drehen zu können.

Am Kopfabschnitt 54 ist eine umlaufende Nut 58 ausgebildet, in die ein Vorsprung eingreift, der als Ringwulst einstückig an der Grundplatte 54 ausgebildet ist. Dieser Vorsprung und die umlaufende Nut 58 bilden eine Axialsicherung für die Stellschraube 50. Die Stellschraube 50 ist im Durchgangsloch 56 drehbar, jedoch aufgrund der Axialsicherung in Axialrichtung der Stellschraube 50 unverschiebbar. Im Kopfabschnitt 54 sind zwei von der Stirnfläche des Kopfabschnitts ausgehende, sich kreuzende Axialschlitze 60 ausgebildet. Diese ermöglichen, dass die Stellschraube 50 von unten (in Figur 3) in das zugeordnete Durchgangsloch 56 eingeschoben wird und dabei der Kopfabschnitt 54 im Bereich der Axialschlitze 60 elastisch radial zusammengedrückt wird, bis die Ringwulst in die Nut 58 einschnappen kann. Die gesamte Stellschraube 50 besteht vorzugsweise aus einem Kunststoffmaterial.

Ferner weist der Kopfabschnitt 54 der Stellschraube 50 eine umlaufende Dichtnut 62 auf, in die ein O-Dichtring eingesetzt ist, der für Dichtheit zwischen der Stellschraube 50 und dem Durchgangsloch 56 sorgt und zugleich aufgrund der Haftreibung an der Stellschraube und der Durchgangslochwand die Stellschraube 50 in ihrer Drehstellung sichert.

Die vorstehende Beschreibung gilt für jede der beiden Stellschrauben 50. Es ist erkennbar, dass mittels der Stellschrauben 50 jeder der beiden Sensorhalter 42 und somit jeder der beiden Hall-Sensoren 38 und 40 entlang einer zur Bewegungsbahn des Magneten 18 parallelen Bewegungsbahn verschoben und eingestellt werden kann. Diese Einstellung kann am fertig montierten und eingebauten Druckmessgerät von außen vorgenommen werden, ohne dass das Druckmessgerät geöffnet zu werden braucht. Für die erforderliche Abdichtung des Inneren des Druckmessgerätes ist durch die beschriebene Ausbildung der Stellschrauben 50 dennoch gesorgt.

In der Grundplatte 24 sind zwei Sacklöcher 64 ausgebildet, deren Orte in Figur 2 durch gestrichelte Kreise verdeutlicht sind. Jedes der beiden Sacklöcher 64 geht von der Innenseite der Grundplatte 24 aus und erstreckt sich bis kurz vor deren Außenseite 28, so dass am Boden des Sackloches 64 eine dünne Wand vorhanden ist, wie Figur 5 zeigt. Die Leiterplatte 26 trägt zwei Leuchtdioden 66, die jeweils in eines der beiden Sacklöcher 64 hineinragen. Wenn die Leuchtdioden 66 Licht aussenden, tritt dieses durch die Bodenwand aus, da die Grundplatte 24 aus einem lichtdurchlässigen Material besteht, damit dieser Lichtaustritt möglich ist.

Jede der beiden Leuchtdioden 66 ist einem der beiden Hall-Sensoren 38 und 40 zugeordnet und beispielsweise so in die elektronische Schaltung auf der Leiterplatte 36 eingefügt, dass die Leuchtdiode leuchtet, wenn die vom zugeordneten Hall-Sensor gelieferte Sensorausgangsspannung einen vorbestimmten Pegel erreicht bzw. hat. Auf diese Weise ermöglicht jede der Leuchtdioden 66 eine optische Überwachung des Schaltzustandes des zugeordneten Hall-Sensors unmittelbar am Druckmessgerät. Dies wird aufgrund der beschriebenen Ausbildung erreicht, ohne dass das Gehäuse des Druckmessgerätes, das bei dem beschriebenen Ausführungsbeispiel aus dem Messgliedgehäuse 2 und der Grundplatte 24 besteht, eine zusätzliche, den Lichtaustritt ermöglichende Öffnung äufzuweisen zu braucht. Dies heißt mit anderen Worten, dass die Zusatzfunktion der optischen Schaltzustandsanzeige keinerlei zusätzliche Abdichtmaßnahmen erfordert.

Die beiden Hall-Sensoren 38 und 40 sind vorzugsweise als Schaltsensoren ausgebildet. Im Betrieb des Druckmessgerätes wird die elektronische Schaltung über den Anschlussstecker 34 mit einer Versorgungsspannung gespeist. Die elektronische Schaltung legt an die Hall-Sensoren eine Eingangsspannung an. Die Bauelemente der elektronischen Schaltung und die Verbindungsleitungen zu den beiden Hall-Sensoren sind in den Figuren nicht dargestellt. Wenn sich der Magnet 18 auf seiner Bewegungsbahn in Abhängigkeit vom in der Kapselfeder 12 wirkenden Druck des Messstoffes ausreichend weit bewegt, ändert sich der Pegel der digitalen Sensorausgangsspannung beispielsweise des ersten Hall-Sensors 38. Der Druck, bei dem diese Änderung auftritt, ist der erste Schaltdruck. Entsprechend der digitalen Sensorausgangsspannung des ersten Hall-Sensors 38 liefert die elektronische Schaltung als Ausgangssignal ein erstes Schaltsignal, das am Anschlussstecker 34 zur Verfügung steht. Je nach Ausbildung der elektronischen Schaltung und der Anordnung des ersten Hall-Sensors 38 am Sensorhalter 42 kann vorgesehen sein, dass das Schaltsignal bei steigendem Druck und Überschreiten des Schaltdrucks entweder ansteigt oder abfällt. Der Schaltdruck, d.h. derjenige Druck, bei dem sich das Schaltsignal ändert, kann verändert und eingestellt werden, indem der erste Hall-Sensor 38 mittels der Stellschraube 50 in eine dem gewünschten Schaltdruck entsprechende Position an der Führungsschiene 26 gebracht wird.

Die vorstehende Erläuterung der Art und Weise, in der das erste Schaltsignal aufgrund der digitalen Sensorausgangsspannung des ersten Hall-Sensors 38 erzeugt wird, gilt sinngemäß auch für die Verarbeitung der digitalen Sensorausgangsspannung des zweiten Hall-Sensors 40 zu einem zweiten Schaltsignal. Zu beachten ist jedoch, dass die Position des zweiten Hall-Sensors 40 relativ zum Magneten 18 unabhängig von der Position des ersten Hall-Sensors 38 ist und unabhängig von der letztgenannten Position veränderbar ist. Das heißt mit anderen Worten, dass der zweite Schaltdruck, bei dem sich das zweite Schaltsignal ändert, unabhängig ist vom ersten Schaltdruck, bei dem sich das erste Schaltsignal ändert. Auf diese Weise liefert das im betrachteten Fall als Druckschalter ausgebildete Druckmessgerät zwei voneinander unabhängige Ausgangssignale. Zu beachten ist ferner, dass die Verarbeitung der Sensorausgangsspannung des zweiten Hall-Sensors 40 durch die elektronische Schaltung unabhängig von der Verarbeitung der Sensorausgangsspannung des ersten Hall-Sensors 38 durch die elektronische Schaltung erfolgt, so dass die beiden Hall-Sensoren in diesem Sinne elektrisch unabhängig voneinander sind.

Abweichend vom vorstehend beschriebenen Fall, bei dem beide Hall-Sensoren Schaltsensoren sind und somit das Druckmessgerät ein Druckschalter ist, kann einer der beiden Hall-Sensoren ein Linearsensor sein, so dass das eine Ausgangssignal des Druckmessgerätes druckproportional ist und das andere Ausgangssignal ein Schaltsignal ist. Ferner können abweichend vom vorstehend beschriebenen Fall beide Hall-Sensoren Linearsensoren sein, deren analoge Sensorausgangsspannungen auf eine jeweils zugeordnete, in die elektronische Schaltung integrierte Komparatorschaltung gegeben werden. Jede der beiden Komparatorschaltungen liefert eine digitale Ausgangsspannung, die als Steuersignal auf einen ersten bzw. auf einen zweiten Halbleiterschalter der elektronischen Schaltung gegeben wird, so dass dann die beiden Halbleiterschalter als Ausgangssignale des Druckmessgerätes zwei Schaltsignale liefern.

Bei dem vorstehend beschriebenen Ausführungsbeispiel sind zwei elektrisch und mechanisch voneinander unabhängige Hall-Sensoren vorgesehen. Es können jedoch auch mehr als zwei voneinander unabhängige Hall-Sensoren vorgesehen sein, wenn das Druckmessgerät mehr als zwei Ausgangssignale liefern soll.

Die in den Figuren 6, 7 und 10 dargestellte zweite Ausführungsform des Druckmessgerätes unterscheidet sich von der ersten Ausfunrungsform allein durch die Ausbildung des federelastischen Messgliedes sowie des Messgliedgehäuses 2. Die zweite Ausführungsform des Druckmessgerätes weist die gleiche Baugruppe 20 auf, die bei dem Druckmessgerät gemäß der ersten Ausführungsform vorhanden ist und schon im Zusammenhang mit dieser erläutert wurde, so dass die Erläuterung der Baugruppe 20, ihrer Elemente und der Funktion ihrer Elemente auch für die zweite Ausführungsform des Druckmessgerätes gilt.

Das Messgliedgehäuse 2 der zweiten Ausführungsform umfasst den Boden 6 mit dem daran angeformten Geräteanschluss 8 und der im Geräteanschluss 8 ausgebildeten Bohrung 10. Zusätzlich weist das Messgliedgehäuse 2 ein quaderförmiges Gehäuseoberteil 68 auf. Im Gehäuseoberteil 68 sind eine im wesentlichen zylindrische, erste Kammer 70 und eine im wesentlichen zylindrische, zweite Kammer 72 ausgebildet. Die beiden Kammern 70 und 72 stehen in Verbindung miteinander und sind relativ zueinander derart angeordnet, dass sich die ihren zylindrischen Wandungen zugeordneten Zylinderachsen unter einem rechten Winkel schneiden. Die erste Kammer 70 mündet an einer Schmalseite des Gehäuseoberteils 68. In die Mündung der ersten Kammer 70 ist der Boden 6 eingesetzt. Der Boden 6 und das Gehäuseoberteil 68 sind fest und dicht miteinander verbunden.

Die zweite Kammer 72 mündet in einer der Längsseiten des quaderförmigen Gehäuseoberteils 68. Vom Boden der zweiten Kammer 72 geht eine zur gegenüberliegenden Längsseite verlaufende Bohrung aus, die mittels eines Stopfens 74 verschlossen ist. In die zweite Kammer 72 ist die Baugruppe 20 eingesetzt. Die Baugruppe 20 ist am Gehäuseoberteil 68 befestigt und gegenüber diesem mittels des in der Nut 30 sitzenden O-Dichtringes abgedichtet. Ein Kerbstift 76, der in das Gehäuseoberteil 68 eingesetzt ist und durch eine Bohrung in der Platte 48 verläuft, sorgt für passgenaue Ausrichtung der Baugruppe 20 in der zweiten Kammer 72.

Innerhalb der ersten Kammer 70 ist als federelastisches Messglied eine Schraubenfeder 78 angeordnet. Deren eines Ende ist fest und dicht mit dem Boden 6 derart verbunden, dass der Messstoff aus der Bohrung 10 in das Innere der Schraubenfeder 78 gelangen kann. Am anderen, freien Ende der Schraubenfeder 78 ist ein Übertragungshebel 80 befestigt. Ein Schenkel 82 des Übertragungshebels 80 ragt von einer Seite der Baugruppe 20 in diese hinein. Am freien Ende des Schenkels 82 ist der Magnet 18 befestigt. Der Schenkel 82 verläuft im wesentlichen parallel zu der Grundplatte 24 und zu der Scheibe 48 sowie zwischen der Grundplatte 24 und der Scheibe 48 und hält den Magneten 18 im Bereich zwischen den beiden Hall-Sensoren 38 und 40 (siehe Figur 7). Da die Achse der Schraubenfeder 78 senkrecht zur Achse des Schenkels 82 verläuft, bewegt der Schenkel 82 den Magneten 18 entlang einer im wesentlichen geradlinigen Bewegungsbahn um eine Strecke, die der druckproportionalen Auslenkung der Schraubenfeder 78 entspricht. Die Schraubenfeder 78 ist in der ersten Kammer 70 derart angeordnet, dass die geradlinige Bewegungsbahn des Magneten 18 parallel zu den Führungsschienen 26 bzw. zu den darin ausgebildeten Nuten 46 verläuft. Die druckabhängige Bewegung des Magneten 18 wird in gleicher Weise in Ausgangssignale des Druckmessgerätes umgewandelt, wie dies vorstehend im Zusammenhang mit der ersten Ausführungsform erläutert worden ist.

Die erste Ausführungsform mit der Kapselfeder 12 eignet sich für niedrige Druckbereiche, und die zweite Ausführungsform mit der Schraubenfeder 78 eignet sich für höhere Druckbereiche. Die Baugruppe 20 ist in beschriebener Weise derart gestaltet, dass sie sich für beide Ausführungsformen in gleicher Weise eignet.

## Patentansprüche

1. Druckmessgerät mit einem federelastischen Messglied (12, 78), das mit dem zu messenden Druck beaufschlagbar ist, einem Messgliedgehäuse (2), an dem das Messglied befestigt ist, einem Magneten (18), der am Messglied befestigt ist und den das Messglied bei einer Änderung des das Messglied beaufschlagenden Druckes entlang einer im Wesentlichen geradlinigen Bewegungsbahn bewegt, einem ersten Hall-Sensor (38) und einem zweiten Hall-Sensor (40), die seitlich neben dem Magneten (18) außerhalb von dessen Bewegungsbahn angeordnet sind, einem Sensorträger (22), der am Messgliedgehäuse (2) befestigt ist und zwei Führungsschienen (26) aufweist, mit denen eine Sensorhalteeinrichtung in Eingriff steht, an der der erste und der zweite Hall-Sensor (38, 40) befestigt sind, und einer elektronischen Schaltung, an die die zwei Hall-Sensoren (38, 40) elektrisch angeschlossen sind und die die Sensorausgangsspannungen der zwei Hall-Sensoren (38, 40) weiterverarbeitet,
**dadurch gekennzeichnet,**
**dass** die elektronische Schaltung die Sensorausgangsspannung des ersten Hall-Sensors (38) zu einem ersten Ausgangssignal des Druckmessgerätes weiterverarbeitet und die Sensorausgangsspannung des zweiten Hall-Sensors (40) unabhängig von der Verarbeitung der Sensorausgangsspannung des ersten Hall-Sensors (38) zu einem zweiten Ausgangssignal des Druckmessgerätes weiterverarbeitet,
**dass** die Sensorhalteeinrichtung aus zwei Sensorhaltern (42) besteht, an denen jeweils einer der zwei Hall-Sensoren (38, 40) befestigt ist und die jeweils mit einer der zwei Führungsschienen (26) derart in Eingriff stehen, dass der Sensorhalter an der Führungsschiene entlang einer Bewegungsbahn verschiebbar ist, die parallel zur Bewegungsbahn des Magneten (18) verläuft, und
**dass** für jeden der zwei Sensorhalter (42) eine Stellschraube (50) vorgesehen ist, die mit dem zugeordneten Sensorhalter und dem Sensorträger (22) derart in Eingriff steht, dass durch Drehen der Stellschraube der Sensorhalter entlang seiner Bewegungsbahn unabhängig von dem jeweils anderen Sensorhalter verschoben wird.

2. Druckmessgerät nach Anspruch 1,
**dadurch gekennzeichnet, dass**
die Sensorhalter (42) jeweils einen zylindrischen Abschnitt (44) aufweisen und die Führungsschienen (26) jeweils eine Nut (46) aufweisen, in der der zylindrische Abschnitt verschiebbar sitzt.

3. Druckmessgerät nach Anspruch 1 oder 2,
**dadurch gekennzeichnet, dass**
der Sensorträger (22) eine Grundplatte (24) mit einer Außenseite (28) und einer Innenseite aufweist, wobei die Innenseite dem Inneren des Messgliedgehäuses (2) zugewandt ist und die Außenseite am Druckmessgerät nach außen freiliegt, und dass die zwei Führungsschienen (26) an der Grundplatte (24) auf deren Innenseite befestigt sind.

4. Druckmessgerät nach Anspruch 3,
**dadurch gekennzeichnet, dass**
die Grundplatte (24) und die Führungsschienen (26) einstückig miteinander ausgebildet sind.

5. Druckmessgerät nach Anspruch 3 oder 4
**dadurch gekennzeichnet, dass**
die jeweilige Stellschraube (50) einen Gewindeabschnitt (52) und einen zylindrischen Kopfabschnitt (54) aufweist, wobei der Gewindeabschnitt in Gewindeeingriff mit dem Sensorhalter (42) steht und der Kopfabschnitt drehbar und in Axialrichtung der Stellschraube unverschiebbar in der Grundplatte (24) gelagert ist und wobei die Stirnfläche des Kopfabschnitts auf der Außenseite (28) der Grundplatte freiliegt.

6. Druckmessgerät nach Anspruch 5,
**dadurch gekennzeichnet, dass**
der Kopfabschnitt (54) eine umlaufende Nut (58) aufweist, in die ein an der Grundplatte (24) eingeordneter Vorsprung eingreift.

7. Druckmessgerät nach Anspruch 6,
**dadurch gekennzeichnet, dass**
der Vorsprung als Ringwulst einstückig an der Grundplatte (24) ausgebildet ist und dass der Kopfabschnitt (54) über einen Teil seiner Länge mit zumindest einem Axialschlitz (60) versehen ist, der von der Stirnfläche des Kopfabschnitts ausgeht.

8. Druckmessgerät nach einem der Ansprüche 5 bis 7,
**dadurch gekennzeichnet, dass**
der Kopfabschnitt (54) eine umlaufende Dichtnut (62) aufweist, in die ein Dichtring eingesetzt ist.

9. Druckmessgerät nach einem der Ansprüche 5 bis 8,
**dadurch gekennzeichnet, dass**
die Stellschraube (50) aus Kunststoff besteht.

10. Druckmessgerät nach einem der Ansprüche 3 bis 9,
**gekennzeichnet durch**
eine Scheibe (48), die an den von der Grundplatte (24) abgewandten Enden der Führungsschienen (26) an diesen befestigt ist und im Wesentlichen parallel zur Grundplatte verläuft.

11. Druckmessgerät nach Anspruch 10,
**dadurch gekennzeichnet, dass**
die Scheibe (48) aus Metall besteht.

12. Druckmessgerät nach einem der Ansprüche 3 bis 11,
**dadurch gekennzeichnet, dass**
jedem der zwei Hall-Sensoren (38, 40) eine Leuchtdiode (66) zugeordnet ist, die zur Anzeige von dessen Schaltzustand dient und auf der Innenseite der Grundplatte (24) angeordnet ist, und dass die Grundplatte aus einem lichtdurchlässigen Material besteht.

13. Druckmessgerät nach Anspruch 12,
**dadurch gekennzeichnet, dass**
für jede Leuchtdiode (66) in der Grundplatte (24) ein von deren Innenseite ausgehendes Sackloch (64) ausgebildet ist, in das die zugeordnete Leuchtdiode ragt.

14. Druckmessgerät nach einem der Ansprüche 1 bis 13,
**gekennzeichnet durch**
eine gedruckte Leiterplatte (36) als Träger der elektronischen Schaltung und einen elektrischen Anschlussstecker (34), wobei die Leiterplatte und der Anschlussstecker am Sensorträger (22) befestigt sind.

15. Druckmessgerät nach einem der Ansprüche 1 bis 14,
**dadurch gekennzeichnet, dass**
der Magnet (18) ringförmig ausgebildet ist, wobei die Ringebene senkrecht zur Bewegungsbahn des Magneten verläuft.

16. Druckmessgerät nach einem der Ansprüche 1 bis 15,
**dadurch gekennzeichnet, dass**
das Messglied eine Kapselfeder (12) ist.

17. Druckmessgerät nach einem der Ansprüche 1 bis 15,
**dadurch gekennzeichnet, dass**
das Messglied eine Schraubenfeder (78) ist.

## Claims

1. Pressure gauge with a spring-elastic measurement member (12, 78), on which the pressure to be measured can act, a measurement member housing (2), onto which the measurement member is attached, a magnet (18), which is attached to the measurement member and moved by the measurement member along a substantially straight trajectory if there is a change in the pressure acting on the measurement member, a first Hall sensor (38) and a second Hall sensor (40), which are arranged laterally next to the magnet (18) and away from the trajectory of the latter, a sensor support (22), which is attached to the measurement member housing (2) and has two guide rails (26) that engage with a sensor-holding apparatus on which the first and the second Hall sensors (38, 40) are attached, and an electronic circuit, to which the two Hall sensors (38, 40) are electrically connected and which processes the sensor output voltages from the two Hall sensors (38, 40),
**characterized**
**in that** the electronic circuit processes the sensor output voltage from the first Hall sensor (38) to form a first output signal of the pressure gauge and processes the sensor output voltage from the second Hall sensor (40) to form a second output signal of the pressure gauge, the latter being independent of the processing of the sensor output voltage of the first Hall sensor (38),
**in that** the sensor-holding apparatus consists of two sensor holders (42), on each of which respectively one of the two Hall sensors (38, 40) is attached and which each engage with one of the two guide rails (26) such that the sensor holder can be displaced on the guide rail along a trajectory running parallel to the trajectory of the magnet (18), and
**in that** an adjusting screw (50) is provided for each of the two sensor holders (42), which adjusting screw engages with the associated sensor holder and the sensor support (22) such that rotating the adjusting screw displaces the sensor holder along its trajectory, independently of the respective other sensor holder.

2. Pressure gauge according to Claim 1,
**characterized in that**
the sensor holders (42) each have a cylindrical section (44) and the guide rails (26) each have a groove (46), within which the cylindrical section is seated in a displaceable fashion.

3. Pressure gauge according to Claim 1 or 2,
**characterized in that**
the sensor support (22) has a base plate (24) with an outer side (28) and an inner side, wherein the inner side faces the interior of the measurement member housing (2) and the outer side on the pressure gauge is exposed to the outside, and **in that** the two guide rails (26) are attached to the base plate (24) on the inner side of the latter.

4. Pressure gauge according to Claim 3,
**characterized in that**
the base plate (24) and the guide rails (26) have a common integral design.

5. Pressure gauge according to Claim 3 or 4,
**characterized in that**
the respective adjusting screw (50) has a threaded section (52) and a cylindrical head section (54), wherein the threaded section is in threaded engagement with the sensor holder (42) and the head section is mounted in the base plate (24) in a rotational fashion and in a non-displaceable fashion in respect of the axial direction of the adjusting screw and wherein the end face of the head section is exposed on the outer side (28) of the base plate.

6. Pressure gauge according to Claim 5,
**characterized in that**
the head section (54) has a circumferential groove (58), into which a projection arranged on the base plate (24) engages.

7. Pressure gauge according to Claim 6,
**characterized in that**
the projection, as an annular bead, is formed integrally on the base plate (24) and **in that** the head section (54) is provided with at least one axial slit (60) over part of its length, which axial slit originates at the end face of the head section.

8. Pressure gauge according to one of Claims 5 to 7,
**characterized in that**
the head section (54) has a circumferential sealing groove (62), into which a sealing ring is inserted.

9. Pressure gauge according to one of Claims 5 to 8,
**characterized in that**
the adjusting screw (50) consists of plastic.

10. Pressure gauge according to one of Claims 3 to 9,
**characterized by**
a disc (48), which is attached to the guide rails (26) at the ends thereof facing away from the base plate (24) and runs substantially parallel to the base plate.

11. Pressure gauge according to Claim 10,
**characterized in that**
the disc (48) consists of metal.

12. Pressure gauge according to one of Claims 3 to 11,
**characterized in that**
a light-emitting diode (66) is associated with each of the two Hall sensors (38, 40), which light-emitting diode serves to indicate the switching state of the respective Hall sensor and is arranged on the inner side of the base plate (24), and **in that** the base plate consists of a transparent material.

13. Pressure gauge according to Claim 12,
**characterized in that**
a blind hole (64) is formed in the base plate (24) for each light-emitting diode (66), which blind hole originates from the inner side of the base plate and into which the associated light-emitting diode projects.

14. Pressure gauge according to one of Claims 1 to 13,
**characterized by**
a printed circuit board (36) as a substrate for the electronic circuit and an electrical connector (34), wherein the circuit board and the connector are attached to the sensor support (22).

15. Pressure gauge according to one of Claims 1 to 14,
**characterized in that**
the magnet (18) has an annular design, wherein the plane of the annulus is perpendicular to the trajectory of the magnet.

16. Pressure gauge according to one of Claims 1 to 15,
**characterized in that**
the measurement member is a capsule element (12).

17. Pressure gauge according to one of Claims 1 to 15,
**characterized in that**
the measurement member is a helical spring (78).

## Revendications

1. Dispositif de mesure de pression avec un organe de mesure (12, 78) présentant l'élasticité d'un ressort, susceptible d'être sollicité avec la pression à mesurer, un boîtier d'organe de mesure (2), auquel l'organe de mesure est fixé, un aimant (18), fixé sur l'organe de mesure et déplaçant l'organe de mesure le long d'une trajectoire de déplacement sensiblement rectiligne dans le cas d'une variation de la pression sollicitant l'organe de mesure, un premier capteur à effet Hall (38) et un deuxième capteur à effet Hall (40), disposés latéralement à côté de l'aimant (18), hors de sa trajectoire de déplacement, un support à capteur (22), fixé sur le boîtier d'organe de mesure (2) et présentant deux rails de guidage (26), avec lesquels est mis en prise un dispositif de maintien de capteur, auquel sont fixés le premier et le deuxième capteur à effet Hall (38, 40), et un circuit électronique, auquel les deux capteurs à effet Hall (38, 40) sont raccordés électriquement et qui retraite les tensions de sortie de capteur des deux capteurs à effet Hall (38, 40),
**caractérisé en ce que**
le circuit électronique retraite la tension de sortie de capteur du premier capteur à effet Hall (38), pour produire un premier signal de sortie du dispositif de mesure de pression, et retraite la tension de sortie de capteur du deuxième capteur à effet Hall (40), indépendamment du traitement de la tension de sortie de capteur du premier capteur à effet Hall (38), pour produire un deuxième signal de sortie du dispositif de mesure de pression,
**en ce que** le dispositif de maintien de capteur est composé de deux supports à capteur (42), à chacun desquels est fixé l'un des deux capteurs à effet Hall (38, 40) et qui sont chacun mis en prise avec l'un des deux rails de guidage (26), de manière que le support à capteur soit déplaçable sur le rail de guidage, le long d'une trajectoire de déplacement s'étendant parallèlement à la trajectoire de déplacement de l'aimant (18),
**en ce que** pour chacun des deux supports à capteur (42) est prévu une vis de réglage (50), mise en prise avec le support à capteur asssocié et le support à capteur (22), de manière que, ar rotation de la vis de réglage, le support à capteur soit déplacé le long de sa trajectoire de déplacement, indépendamment de chaque fois l'autre support à capteur.

2. Dispositif de mesure de pression selon la revendication 1,
**caractérisé en ce que**
les suppôts à capteur (42) présentent chacun un tronçon (44) cylindrique et les rails de guidage (26) présentent chacun une rainure (46), dans laquelle le tronçon cylindrique est monté de manière déplaçable.

3. Dispositif de mesure de pression selon la revendication 1 ou 2,
**caractérisé en ce que**
le support à capteur (22) présente une plaque de base (24) avec une face extérieure (28) et une face intérieure, la face intérieure étant tournée vers l'intérieur du boîtier d'organe de mesure (2), et la face extérieure étant exposée librement vers l'extérieur sur le dispositif de mesure de pression, et **en ce que** les deux rails de guidage (26) sont fixés sur la plaque de base (24), sur sa face intérieure.

4. Dispositif de mesure de pression selon la revendication 3,
**caractérisé en ce que**
la plaque de base (24) et les rails de guidage (26) sont réalisés d'une seule pièce ensemble.

5. Dispositif de mesure de pression selon la revendication 3 ou 4,
**caractérisé en ce que**
la vis de réglage (50) respective présente un tronçon fileté (52) et un tronçon de tête (54) cylindrique, le tronçon fileté étant en prise, par filetage, avec le support à capteur (42) et le tronçon de tête étant monté dans la plaque de base (24) de manière déplaçable en rotation et immobile en translation dans la direction axiale de la vis de réglage, et la face frontale du tronçon de tête étant exposée librement sur la face extérieure (28) de la plaque de base.

6. Dispositif de mesure de pression selon la revendication 5,
**caractérisé en ce que**
le tronçon de tête (54) présente une gorge (58) de pourtour, dans laquelle s'engage une saillie agencée sur la plaque de base (24).

7. Dispositif de mesure de pression selon la revendication 6,
**caractérisé en ce que**
la saillie est réalisée sous forme de bourrelet annulaire, d'une seule pièce sur la plaque de base (24), et **en ce que** le tronçon de tête (54) est muni, sur une partie de sa longueur, d'au moins une fente axiale (60) partant de la face frontale du tronçon de tête.

8. Dispositif de mesure de pression selon l'une des revendications 5 à 7,
**caractérisé en ce que**
le tronçon de tête (54) présente une gorge d'étanchéité (62) de pourtour, dans laquelle est insérée une bague d'étanchéité.

9. Dispositif de mesure de pression selon l'une des revendications 5 à 8,
**caractérisé en ce que**
la vis de réglage (50) est en matière synthétique.

10. Dispositif de mesure de pression selon l'une des revendications 3 à 9,
**caractérisé par**
un disque (48), fixé aux extrémités, opposées à la plaque de base (24), des rails de guidage (26), sur ceux-ci, et s'étendant sensiblement parallèlement à la plaque de base.

11. Dispositif de mesure de pression selon la revendication 10,
**caractérisé en ce que**
le disque (48) est en métal.

12. Dispositif de mesure de pression selon l'une des revendications 3 à 11,
**caractérisé en ce qu'**à
chacun des deux capteurs à effet Hall (38, 40) est associé une diode luminescente, servant à l'affichage de son état de commutation et disposée sur la face intérieure de la plaque de base (24), et **en ce que** la plaque de base est composé d'un matériau transparent à la lumière.

13. Dispositif de mesure de pression selon la revendication 12,
**caractérisé en ce que**,
pour chaque diode luminescente (66) dans la plaque de base (24) est réalisé un trou borgne (64) partant de sa face intérieure, dans lequel pénètre la diode luminescente associée.

14. Dispositif de mesure de pression selon l'une des revendications 1 à 13,
**caractérisé par**
une plaquette à circuit imprimé (36) imprimée, faisant office de support du circuit électronique et par une prise mâle de raccordement électrique (34), la plaquette à circuit imprimé et la prise mâle de raccordement électrique étant fixées sur le support à capteur (22).

15. Dispositif de mesure de pression selon l'une des revendications 1 à 14,
**caractérisé en ce que**
l'aimant (18) est conformé en anneau, le plan d'anneau s'étendant perpendiculairement à la trajectoire de déplacement de l'aimant.

16. Dispositif de mesure de pression selon l'une des revendications 1 à 15,
**caractérisé en ce que**
l'organe de mesure est un ressort en soufflet (12).

17. Dispositif de mesure de pression selon l'une des revendications 1 à 15,
**caractérisé en ce que**
l'organe de mesure est un ressort hélicoïdal (78).
